(19) **Europäisches Patentamt European Patent Office Office européen des brevets**

(11) **EP 3 109 617 B1**

(12) **EUROPEAN PATENT SPECIFICATION**

(45) Date of publication and mention
of the grant of the patent:
**19.10.2022 Bulletin 2022/42**

(51) International Patent Classification (IPC):
**G01N 21/03** *(2006.01)* **G01N 35/02** *(2006.01)*
**B01L 3/00** *(2006.01)* **G01N 21/27** *(2006.01)*
**G01N 35/00** *(2006.01)*

(21) Application number: **15752273.1**

(52) Cooperative Patent Classification (CPC):
**G01N 21/03**

(22) Date of filing: **10.02.2015**

(86) International application number:
**PCT/JP2015/053608**

(87) International publication number:
**WO 2015/125663 (27.08.2015 Gazette 2015/34)**

(54) **REACTION CELL AND BIOCHEMICAL AUTOMATED ANALYZER**

REAKTIONSZELLE UND BIOCHEMISCHE AUTOMATISIERTES ANALYSEVORRICHTUNG

CELLULE RÉACTIONNELLE ET ANALYSEUR BIOCHIMIQUE AUTOMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.02.2014 JP 2014031886**

(43) Date of publication of application:
**28.12.2016 Bulletin 2016/52**

(73) Proprietor: **Hitachi High-Tech Corporation**
**Minato-ku**
**Tokyo 105-6409 (JP)**

(72) Inventors:
• **IKEDA Ukyo**
**Tokyo 100-8280 (JP)**
• **KONO Tsutomu**
**Tokyo 100-8280 (JP)**
• **KOMORI Norihisa**
**Hitachinaka-shi**
**Ibaraki 312-0033 (JP)**
• **YOSHIDA Satoshi**
**Hitachinaka-shi**
**Ibaraki 312-0033 (JP)**

(74) Representative: **Manitz Finsterwald**
**Patent- und Rechtsanwaltspartnerschaft mbB**
**Postfach 31 02 20**
**80102 München (DE)**

(56) References cited:
**EP-A1- 1 870 713    EP-A1- 1 909 094**
**EP-A2- 0 404 258    CN-Y- 201 156 031**
**JP-A- H05 133 881    JP-A- S60 166 843**
**JP-A- 2003 106 991    JP-A- 2006 349 582**
**JP-A- 2007 534 928    JP-A- 2008 096 115**
**US-A- 5 347 358    US-A1- 2012 156 796**

## Description

Technical Field

The present invention relates to a molded reaction cell for use in an automatic biochemical analyzer and an automatic biochemical analyzer using the same.

Background Art

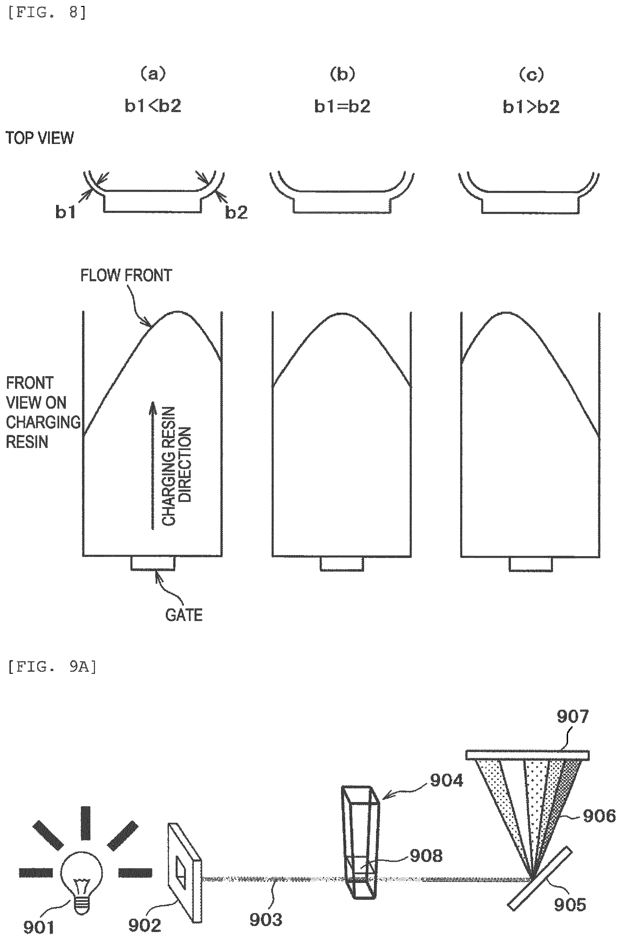

An automatic biochemical analyzer is an apparatus for automatically performing absorption spectroscopy of blood serum components. The absorption spectroscopy of blood serum components is a technique for estimating contents of components such as carbohydrates, proteins, and minerals present in a serum, by mixing and reacting a reagent with the serum, allowing various wavelengths of light to penetrate the obtained mixture, and measuring absorbance at the wavelengths, and used in health checkup and other examinations. Fig 9A shows a schematic diagram of absorption spectroscopy of blood serum components. Parallel rays of light (photometry beam) 903 are extracted from light emitted from a light source 901 by, for example, allowing the light to pass through a slit 902, and the photometry beam are allowed to enter a mixture 908 of a serum and a reagent. The transmitted beam is divided using a diffraction grating 905 to obtain a spectrum 906. The absorbance at the wavelengths are determined from the spectrum in a detection unit 907, thereby estimating the contents of the respective components in the serum.

A container in which the serum and the reagent are mixed is called a reaction cell 904. For transmitting a light beam, the reaction cell 904 desirably has high transmittances in a band of from 100 nm to 1000 nm including visual light. As such, an optical material is used as a material for a reaction cell. In addition, from the viewpoint of the analytical efficiency, parallel rays are used as a transmitted beam for the purpose of collecting the transmitted beam on one position without dispersion to perform the analysis, and the reaction cell is generally in a box shape in which flat plates are assembled. Amounts of the serum and reagent required for achieving highly reliable analysis are several microliters to several tens of microliters, and a typical size of a reaction cell is several tens of square millimeters in cross section and several tens of millimeters in height. A region used for the photometry in the analysis is restricted at a height several millimeters from the cell bottom.

Automatic biochemical analyzers are sometimes designed in the following manner from the viewpoint of automatically analyzing a large number of serums at high speed. Reaction cells are arranged on the periphery of a disk or the like, a light source is placed on the center of the circle and a diffraction grating is placed in a direction of a radius vector, and the disk is rotated to perform photometry of the reaction cells one by one.

Here, reaction cells are basically consumable, and thus high productivity is required to response daily huge number of biochemical examinations. For this reason, a reaction cell is molded and fabricated into a box by injection molding from an optical resin or an optical glass. In addition, from the viewpoint of enhancing productivity and reducing cost, a reaction cell in which several to several tens of cells are integrally molded (hereinafter referred to as a serial cell) may be used in some cases. Molding of such a serial cell is disclosed in PTL 1.

Citation List

Patent Literature

PTL 1: JP-A-2005-283539

EP 0 404 258 A2 discloses a cuvette 1 of elongated form with a small rectangular internal section for medical analysis by passing light through a product to be examined wherein a larger external surface has the form of a lens (convex or concave) which deflects light through the thickness of the cuvette.

JP S60 166843 A discloses a glass cell which is manufactured by welding parallel light transmissive plates to externally curved side wall plates and providing a bottom part to a lower end.

EP 1 870 713 A1 discloses apparatus for multiple automatic analysis of biosamples, a method for an autoanalysis and a reaction cuvette. The reaction cuvette is characterized by a mounting projection, having an arc shaped form, protruding from an upper side wall of the main part. Preferably, the reaction cuvette has a main part having the form of a generally rectangular parallelepiped and a rounded portion on the inner bottom.

US 2012/156796 A1 discloses a photometric cuvette for measurements of small liquid volumes , wherein the cuvette is manufactured in one piece of injection moulded polymeric material. Various cuvette shapes are shown, having corner portions which are less thick than the corresponding side wall plates.

Summary of Invention

Technical Problem

In molding and manufacturing reaction cells, molding failure is often a problem. Molding failure includes weld and foreign matter. Weld among them is an uncharged portion solidified and forms a micro notch shape. When weld is present in a beam transmission part, light scattering occurs in the photometry to decrease the analytical efficiency, sometimes resulting in a measurement error. For this reason, when weld is recognized in a beam transmission part in inspection after molding, such a product is eliminated from the products to be shipped as a defective. In particular, as for the serial cell mentioned above, even when only one cell among the plural cells is failed in molding, the entire serial cell including the other cells integrated therewith becomes a defective product. Accordingly, in such a serial cell, the effect of weld generation in a beam transmission part on the yield is larger than that in single cell molding, and weld becomes a more serious problem.

If weld is present, furthermore, when the cell receives an impact, for example, upon careless falling in conveyance or upon contact with a nozzle in dispensing a specimen (serum), a stress concentration on a notch tip of the weld possibly triggers cell fracture. It is therefore desirable that no weld is present over the entire cell. It is desirable that no weld is present at least in the beam transmission part.

Thus, an object of the present invention is to provide a reaction cell for automatic biochemical analyzer in which weld generation in beam transmission parts is prevented to reduce scattering of transmitted beam, thereby having a stable transmissivity to achieve high analytical efficiency.

Solution to Problem

It has been found that, in the weld generation, a position and a merging angle of a merging section of a resin in molding depend on the resin charging pattern, and that the resin charging pattern substantially depends on the size and shape of a cavity. Accordingly, it can be said that it is important to design the size and shape of a cavity so that no resin merging is produced on charging.

However, it is actually difficult to avoid resin merging in many cases. As a countermeasure, devises are conceivable such as providing a vent (exhaust opening of a mold cavity) in the vicinity of the resin merging position and forcing to produce weld in a position that does not impair performance of the product. In the case of a serial cell, however, since intervals between cells are as small as several millimeters, it is difficult to provide a vent for each cell.

For solving the above problem, the reaction cell of the present invention has the characteristics set out in the accompanying claims.

Advantageous Effects of Invention

According to the present invention, it is possible to provide a reaction cell for automatic biochemical analyzer in which weld generation in a beam transmission part is prevented, whereby stable transmissivity can be achieved.

Brief Description of Drawings

[Fig. 1] Fig. 1 is schematic diagrams of a reaction cell described in Embodiment 1.
[Fig. 2] Fig. 2 is schematic diagrams of weld generation mechanism.
[Fig. 3] Fig. 3 is schematic diagrams of a conventional reaction cell.
[Fig. 4] Fig. 4 shows resin charging processes in reaction cell injection molding by molding simulations.
[Fig. 5A] Fig. 5A shows results of computation of cell thicknesses and weld generation.
[Fig. 5B] Fig. 5B shows input values used for the computation of Fig. 5A.
[Fig. 6] Fig. 6 is a schematic top view of a reaction cell described in Embodiment 2.
[Fig. 7] Fig. 7 is schematic top and cross-sectional views of a reaction cell described in Example 1, which is not part of the claimed invention.
[Fig. 8] Fig. 8 shows relationships between thicknesses of corner portions of a reaction cell of the present invention and resin charging distributions.
[Fig. 9A] Fig. 9A is a schematic diagram of an absorption spectroscopy of blood serum components.
[Fig. 9B] Fig. 9B is a schematic diagram of an automatic biochemical analyzer.

Description of Embodiment

The present invention will be described in detail herein below with reference to examples.

Embodiment 1

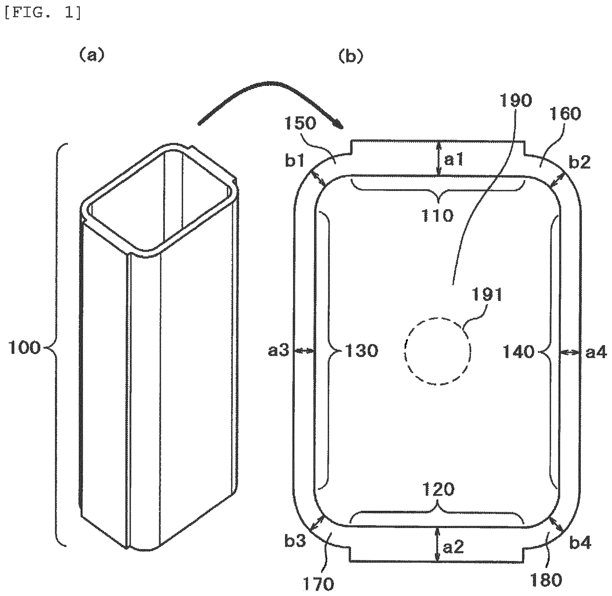

Fig. 1 is schematic diagrams of a reaction cell of the present invention, wherein (a) is a bird's-eye view and (b) is a schematic top view of a shape of the reaction cell. A reaction cell 100 comprises two pairs of flat plates 110 and 120, and 130 and 140, each pair facing to each other, a corner portion 150 connecting the flat plates 110 and 130, a corner portion 160 connecting the flat plates 110 and 140, a corner portion 170 connecting the flat plates 120 and 130, a corner portion 180 connecting the flat plates 120 and 140, and a bottom 190. Incidentally, in this figure, the flat plates 110 and 120 constitute short sides and the flat plates 130 and 140 constitute long sides. The reaction cell 100 has a gate 191 in the center of the rear surface of the bottom 190, and is characterized by satisfying the following relationships, wherein $a1$ and $a2$ respectively represent thicknesses of the pair of flat plates 110 and 120 and $b1$ to $b4$ respectively represent the maximum thicknesses of the corner portions 150 to 180 on the opposite ends of the flat plates 110 and 120:

$a1 > b1$, $a1 > b2$, $a2 > b3$, and $a2 > b4$

From the top opening of the reaction cell 100 shown in the bird's-eye view Fig. 1(a), a specimen to be analyzed (for example, blood serum components) is dropped to fill the reaction cell 100.

The reaction cell 100 filled with the specimen is irradiated with light beam, and the beam is transmitted from the flat plate 120 to the flat plate 110, or from 110 to 120 shown in Fig. 1(b). By detecting the transmitted beam, absorption spectroscopy of the specimen is performed. Here, the surface which transmits the light beam is referred to as a beam transmission part. If weld is generated in the beam transmission part, the transmitted beam is partially absorbed or scattered and stable transmissivity cannot be secured.

Thus, the aforementioned shape according to the present invention is adopted, whereby weld generation in a beam transmission part can be prevented to achieve stable transmissivity. The reason is described below in comparison with a conventional shape.

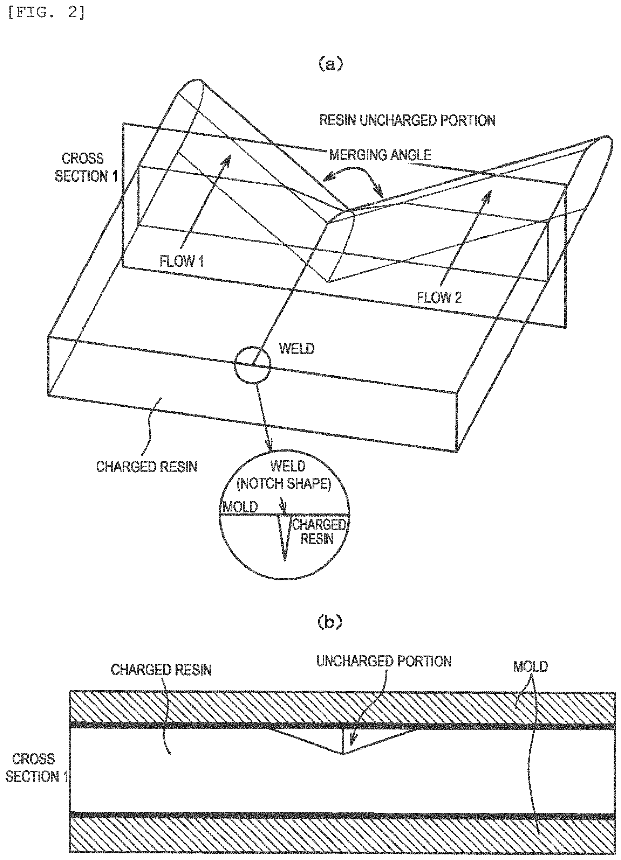

Schematic diagrams of explaining the mechanism of weld generation are shown in Fig. 2. Fig. 2 shows flows of a resin which is in course of charging a mold (flows 1 and 2 in the figure). (a) is a bird's-eye view showing an aspect of resin flows, and (b) shows a cross sectional view of the mold charged with the resin taken along a cross section 1 of (a).

As shown in Fig. 2(a), in resin charging in molding, the distribution of the flow rate is not uniform and there exist a part charged quickly and a part charged slowly so that confluence of resin (merging) occurs in a part charged slowly. When the resin is solidified in this merging section while leaving a gas such as air existing previously in the cavity without being fully exhausted, such a section remains on the surface of the molded product as weld. Here, "merging angle" is "opening angle toward a resin-uncharged portion to which air is exhausted", and the smaller the merging angle, the smaller the space to which air escapes and it becomes more difficult to exhaust air. Accordingly, the smaller the merging angle, the greater the possibility of generating a weld.

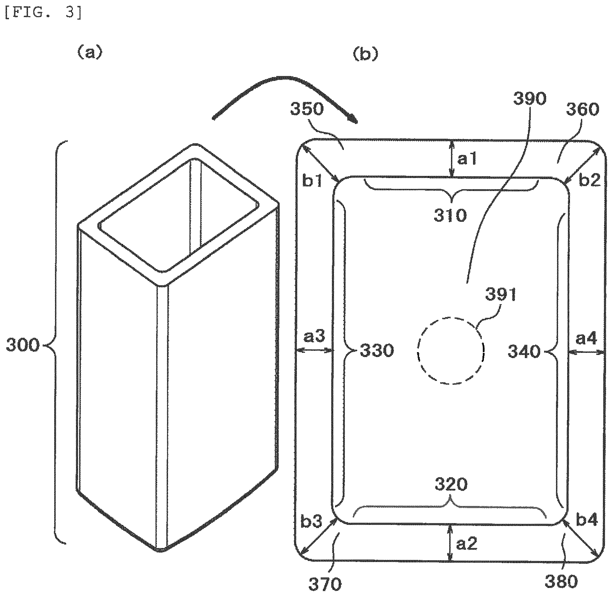

Fig. 3 shows a conventional shape. A conventional reaction cell 300 comprises two pairs of flat plates 310 and 320, and 330 and 340, each pair facing to each other, a corner portion 350 connecting the flat plates 310 and 330, a corner portion 360 connecting the flat plates 310 and 340, a corner portion 370 connecting the flat plates 320 and 330, a corner portion 380 connecting the flat plates 320 and 340, and a bottom 390, and has a gate 391 in the center of the rear surface of the bottom 390. As compared with the respective thicknesses a1 and a2 of one pair of flat plates 310 and 320 which are beam transmission parts, the respective maximum thicknesses b1, b2, b3, b4 of the corner portions 350 to 380 at the opposite ends of the plates has been larger.

As a result, in resin charging in molding, the corner portions are charged earlier than the beam transmission parts. The reason is that resin flows preferentially into a part having a smaller flow resistance. Flow resistance is directly proportional to the cube of the thickness, and the smaller the thickness, the larger the flow resistance. For this reason, the charging rate in the beam transmission part having a smaller thickness is lower than that in the corner portions, and resin merging occurs in the beam transmission part.

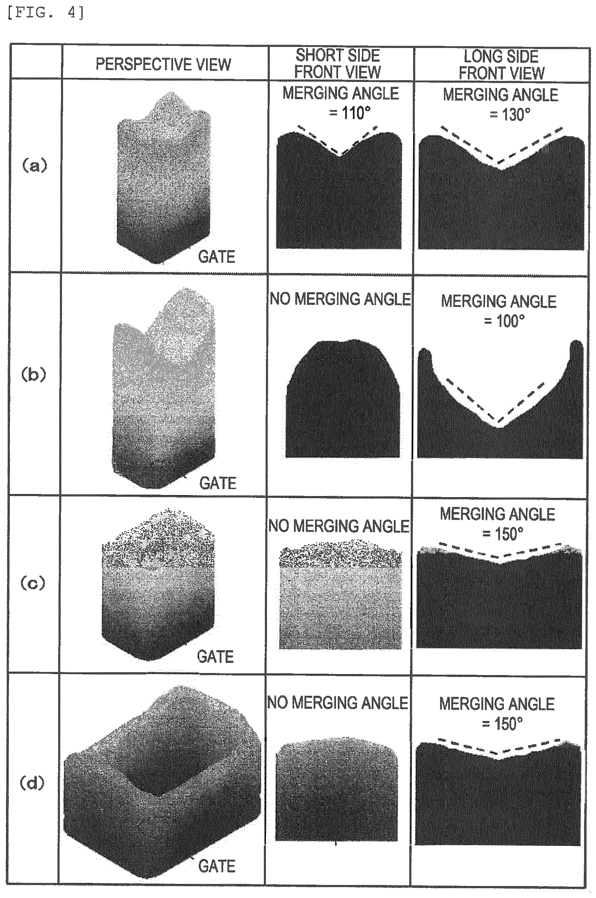

For verifying this phenomenon, a resin charging process was computed using a molding simulation software. The results are shown in Fig. 4.

Fig. 4(a) is an example of the computation in a case of the conventional reaction cell shown in Fig. 3 where the thickness of the corner portions are larger than the thickness of the beam transmission parts. The resin flows in the mold from the gate, and then flows preferentially into the corner portions having a larger thickness. Flows running in two corner portions across a flat plate portion form a V-shape, and the merging angle in short side flat plate portions which are beam transmission parts is as small as 110 degrees. Accordingly, it is recognized that when air is not sufficiently exhausted, it is highly possible to generate weld. In the long side flat plate portions, the merging angle is 130 degrees. By comparing with an experiment conducted separately, it has been found that weld is generated when the merging angle in the molding simulation is smaller than 130 degrees.

On contrary, in the cell shape of the present invention shown in Fig. 1, the thicknesses of the corner portions are smaller than those of the beam transmission parts. It can be expected that such a shape allows the flow rate in beam transmission parts to increase, thereby avoiding resin merging in the parts. For verifying this phenomenon with a three dimensional cell shape, a resin charging process of the cell shape of the present invention was computed by a molding simulation. The results of an example thereof are shown in Fig. 4(b).

The flow rate in the short side flat plate portions which are beam transmission parts are increased relative to the corner portions, and as a result, resin merging is not recognized in the short side flat plate portions, and weld generation can be prevented. Incidentally, the thicknesses of the short side corner portions are not required to be the same. The reason is described with reference to Fig. 8 which shows relationships between the thicknesses of corner portions of a reaction cell and the resin charging distributions. (a) shows a case where the corner portion thicknesses satisfy b1 < b2, (b) is a case of b1 = b2, and (c) is a case of b1 > b2. Even if the thicknesses of the two corner portions (for example, 150, 160) relative to the thickness of the beam transmission part are supposedly different to each other, as shown in Fig. 8(a) or (c), the resin merging in the beam transmission part can be avoided.

Generally in a reaction cell, in view of the parallel property of the transmitted beam, flat plates each having a constant thickness are used for the short side walls. However, it is difficult to make a flat plate having a strictly constant thickness for the precision limit of the molding processing or other reasons. Nevertheless, when the variation of the thickness by position in a beam transmission part is within 10 μm and the thicknesses of the corner portions are smaller than the thickness of the beam transmission part including the variation, the present invention is advantageous.

If the parallel property of the transmitted beam is sacrificed to some extent, the thickness is not necessarily required to be constant. In this case, for the reason mentioned above, when a shape is adopted in which the tube wall thickness of the reaction cell has a maximum value in a part and the thickness monotonically decreases from the part having the maximum value to a short side corner portion, merging does not occur when a resin flows into the mold, and no weld is generated.

In the case of Fig. 4(b), the resin merging angle on the long sides which is not beam transmission parts is as small as 100 degrees and weld is generated. The reason is considered to be the thickness of the corner portions being made excessively small relative to that of the beam transmission part flat plate portions. However, since the long sides are not beam transmission parts, the generated weld does not effect on the transmissivity of light beam.

The case of Fig. 4(c) is described in the following paragraph, and the case of (d) is described in Embodiment 3.

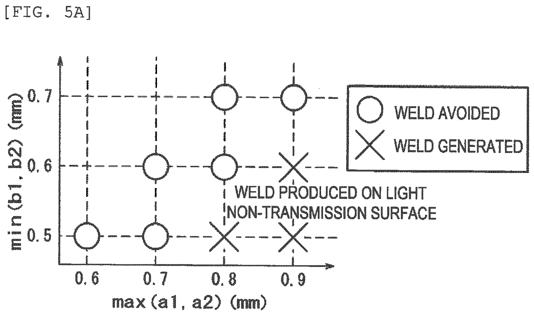

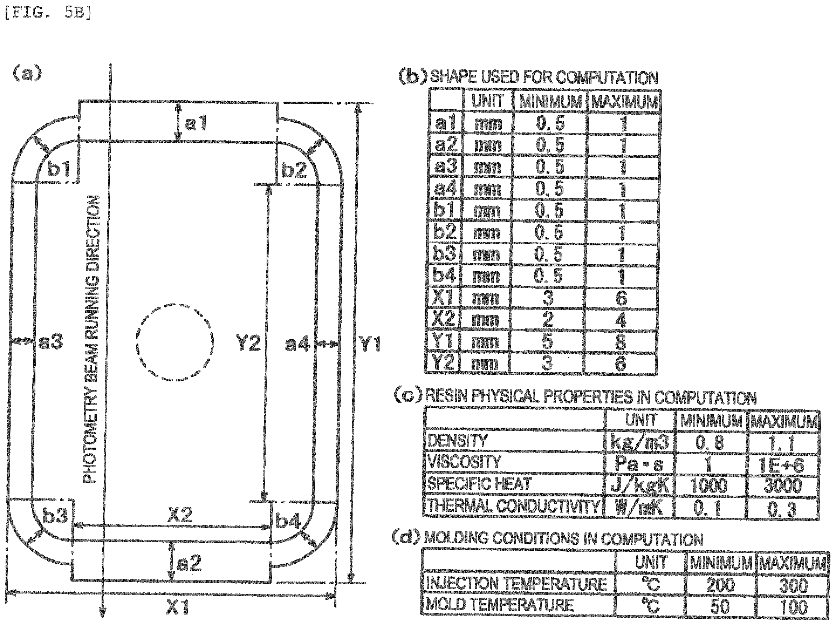

In the case of Fig. 4(b), it is considered that by appropriately setting the difference in thickness between the short sides and the long sides, weld generation on the long sides can also be prevented. Thus, computations are made while varying the size and shape of cell, the resin material, and the molding conditions, whereby the resin merging angle on the long sides is checked. The weld avoidable range obtained as a result of the above computations is shown in Fig. 5A. In Fig. 5B, the shape of the reaction cell and the list of the parameters used for deriving the results shown in Fig. 5A are shown. (a) is a plan view of the reaction cell, (b) shows the parameter ranges (the minimum and maximum) with respect to the shape used for the computation, (c) shows a characteristic range (the minimum and maximum) of the resin physical properties in the computation, and (d) shows a range (the minimum and maximum) of the molding conditions. Incidentally, the physical properties, such as viscosity, of the resin vary depending on the temperature and shear velocity even in the same resin, although ranges of the values taken in the computation are shown here. In addition, the beam transmission parts are not necessarily required to be on the short sides, although the short sides are taken as the beam transmission parts here.

In Fig. 5A, while the abscissa represents the larger value of the thicknesses a1 and a2 of the flat plates 310 and 320 and the ordinate represents the smaller value of the thickness b1 and b2 of the corner portions, the presence or absence of weld generation is plotted.

From Fig. 5A, it has been found that the weld generation in the long side flat plate portions can be prevented when the value obtained by subtracting the value on the ordinate from the value on the abscissa is 0.2 mm or less, that is, in the range satisfying: $\max(a1,a2) - \min(b1,b2) < 0.2$. Here, $\max(a1,a2)$ represents a function for extracting the maximum value from the variables in the parenthesis, and $\min(b1,b2)$ represents a function for extracting the minimum value from the variables in the parenthesis. Fig. 4(c) is an example of the computation results in the above range.

According to this embodiment, therefore, it is possible to prevent weld generation in the beam transmission parts to thereby provide a reaction cell for automatic biochemical analyzer having high analytical efficiency in which scattering of a transmitted beam is reduced to achieve a stable transmissivity.

Embodiment 2

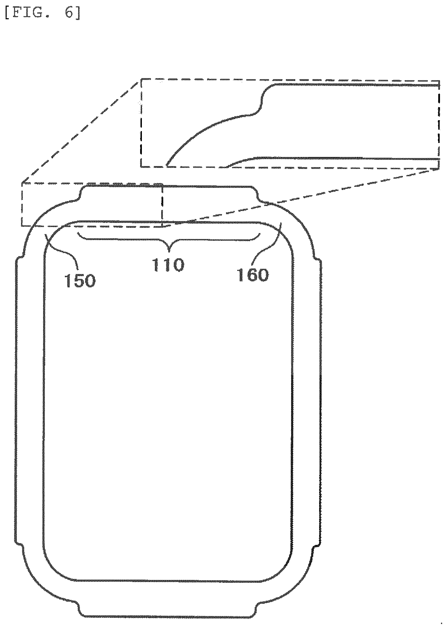

In the reaction cell shown in Fig. 1, the cell thickness is maintained in a constant value in the flat plates 110 and 120 and the opposite end portions form angular shapes. In this embodiment, by adopting a shape in which the cell thickness gradually varies as shown in Fig. 6, the release resistance can be decreased and deposition and remaining of air bubbles during the analysis can be reduced. According to the experiments, such an effect was recognized by making a radius of the circle inscribed in the surface shape larger than 0.1 mm.

During the analysis, the cell is immersed in a liquid with a controlled temperature for the purpose of controlling the serum temperature, but air bubbles, if deposited on the surface for the photometry, may induce a measurement error. However, by adopting the shape shown in this embodiment, deposition and remaining of air bubbles can be reduced, and therefore inducement of a measurement error can be advantageously prevented.

Example 1

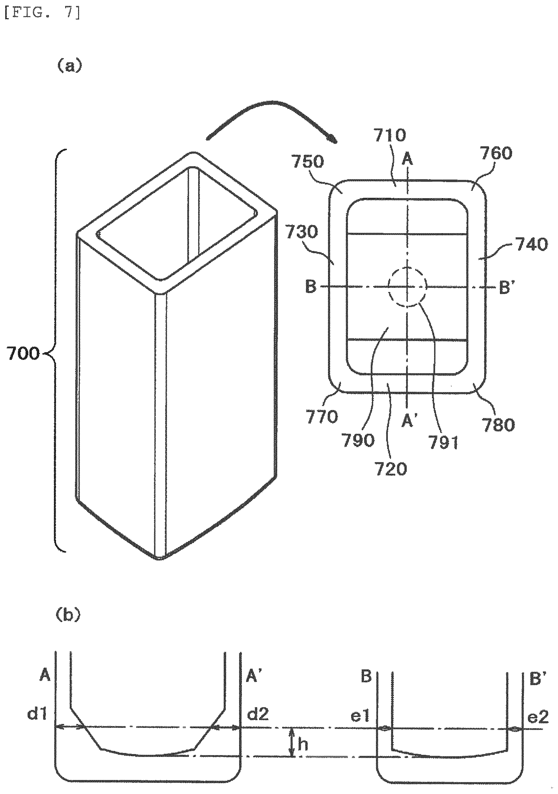

Fig. 7 shows another shape of the reaction cell. This shape is different from that in Embodiment 1 in that the thicknesses of the corner portions are the same as in the conventional cell and slopes are provided on the beam transmission part sides of the cell bottom.

The reaction cell 700 comprises two pairs of flat plates 710 and 720, and 730 and 740, each pair facing to each other, a corner portion 750 connecting the flat plates 710 and 730, a corner portion 760 connecting the flat plates 710 and 740, a corner portion 770 connecting the flat plates 720 and 730, a corner portion 780 connecting the flat plates 720 and 740, and a bottom 790, and has a gate 791 in the center of the rear surface of the bottom 790.

This cell satisfies the following relationships between the thicknesses d1 and d2 of the short sides at a height from the cell bottom and the thicknesses e1 and e2 of the long sides at the same height h:

d1 > e1, d1 > e2, d2 > e1, and d2 > e2 Fig. 4(d) shows an example of computation results of the resin charging process of this shape by a molding simulation. As shown in Fig. 4(d), no merging portion is generated on the short sides.

Accordingly, also in the shape shown in this example, no resin merging is recognized in the short side flat plate portions which are beam transmission parts, and weld generation can be prevented. Unlike in Embodiment 1, the effect of avoiding resin merging in the beam transmission parts is limited to a certain height from the cell bottom having the gate in this example. However, since the range used for photometry during the analysis can be made within the range where the effect is given, there is no problem in practice.

Embodiment 3

This embodiment relates to an automatic biochemical analyzer which automatically performs absorption spectroscopy using a reaction cell according to any one of Embodiments 1 and 2.

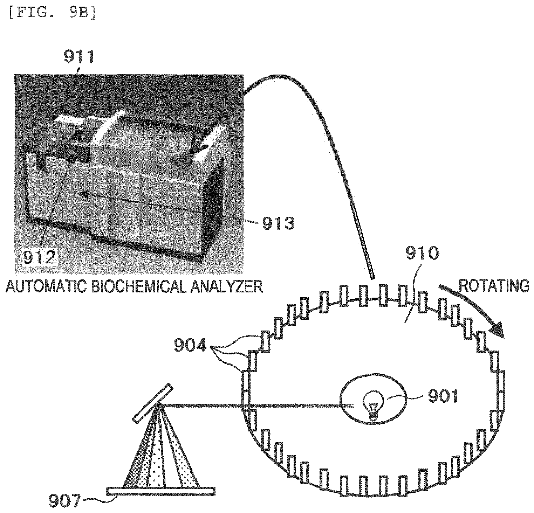

As shown in Fig. 9B, the automatic biochemical analyzer comprises a light source 901 which emits light toward a reaction cell 904 arranged along the periphery of a rotatable disc 910, a detection unit 907 which detects a light beam transmitted through the reaction cell, a control unit 913 (built in a housing of the analyzer) which controls the detection unit and the like, an input unit 912 which inputs data into the control unit 913, a display unit 911 which displays an output from the control unit, and the like. Except for using the reaction cell of the present invention, the present automatic biochemical analyzer has the same configuration as in a conventional one.

The reaction cell is filled with a test liquid in which a serum is mixed and reacted with a reagent. The reaction cell is then irradiated with a light beam having wavelengths in a band of from 100 nm to 1000 nm including visual light to allow the light beam to transmit through the test liquid. The absorbance at the wavelengths of the transmitted beam are measured to estimate contents of components, such as carbohydrates, proteins, and minerals, present in the serum.

In the reaction cells according to the Embodiments described above, no weld is generated at least in the beam transmission parts.

Since the decrease of analytical efficiency due to light scattering in the photometry therefore does not occur and no measurement error occurs, it is possible to provide an automatic biochemical analyzer having high analytical precision which is equipped with reaction cells having stable transmissivity.

In addition, the configuration of the present invention is realized not only in the beam transmission parts but also over a wide range of the beam transmission surface, and still over the entire beam transmission surface. This is obviously preferable.

Reference Signs List

100, 300, 700 ... Reaction cell,
110, 120, 130, 140, 310, 320, 330, 340, 710, 720, 730, 740 ... Cell flat plate portion,
150, 160, 170, 180, 350, 360, 370, 380, 750, 760, 770, 780 ... Cell corner portion,
190, 390, 790 ... Cell bottom
191, 391, 791 ... Gate,

901 ... Light source, 902 ... Slit, 903 ... Parallel rays (Photometry beam), 904 ... Reaction cell, 905 ... Diffraction grating, 906 ... Spectrum, 907 ... Detection unit, 910 ... Disc,
911 ... Display unit, 912 ... Input unit, 913 ... Control unit.

## Claims

1. A molded reaction cell (100), comprising two pairs (110, 120; 130, 140) of flat plates facing each other, wherein a first pair (110,120) of the two pairs (110,120;130,140) comprises a first flat plate (110) and a second flat plate (120), corner portions (150, 160, 170, 180) connecting the flat plates, and a bottom portion (191),
   wherein the following relationships are satisfied:

   $$a1 > b1, \; a1 > b2, \; a2 > b3, \text{ and } a2 > b4,$$

   wherein a1 and a2 respectively represent thicknesses of the first pair (110, 120) of flat plates and b1 and b2 respectively represent maximum thicknesses of the corner portions (150, 160) connecting to the opposite ends of the first flat plate (110) having the thickness a1, and b3 and b4 respectively represent maximum thicknesses of the corner portions (170, 180) connecting to the opposite ends of the second flat plate (120) having the thickness a2,
   **characterized in that**
   the plates of the first pair (110, 120) of flat plates each have steps on the outer surface at the connecting portions of each flat plate towards the respective corner portions.

2. The reaction cell according to claim 1, wherein a1 and a2, and b1, b2, b3, and b4 satisfy the following relationship:

   $$\max(a1,a2) - \min(b1,b2) \leq 0{,}2 \text{ mm}.$$

3. The reaction cell according to claim 1, wherein the outer surface has a shape having a radius of curvature r at the connecting portion, and is connected to the corner portion while satisfying r > 0,1 mm.

4. The reaction cell according to any of claims 1 to 3, wherein thicknesses of the first pair of flat plates of the two pairs of flat plates facing to each other are larger than thicknesses of the second pair of flat plates, and the parts having the larger thicknesses of the first pair of flat plates serve as beam transmission parts.

5. An automatic biochemical analyzer equipped with a reaction cell as set forth in any of claims 1 to 4.

## Patentansprüche

**1.** Geformte Reaktionszelle (100), die zwei Paare (110, 120; 130, 140) von flachen Platten umfasst, die einander zugewandt sind, wobei ein erstes Paar (110, 120) der zwei Paare (110, 120; 130, 140) eine erste flache Platte (110) und eine zweite flache Platte (120), Eckabschnitte (150, 160, 170, 180), die die flachen Platten verbinden, und eine Bodenöffnung (191) umfasst,
wobei die folgenden Beziehungen erfüllt sind:

$$a1 > b1,\ a1 > b2,\ a2 > b3,\ \text{und } a2 > b4,$$

wobei a1 und a2 jeweils Dicken des ersten Paares (110, 120) von flachen Platten darstellen und b1 und b2 jeweils maximale Dicken der Eckabschnitte (150, 160) darstellen, die mit den gegenüberliegenden Enden der ersten flachen Platte (110) mit der Dicke a1 verbunden sind, und b3 und b4 jeweils maximale Dicken der Eckabschnitte (170, 180) darstellen, die mit den gegenüberliegenden Enden der zweiten flachen Platte (120) mit der Dicke a2 verbunden sind, **dadurch gekennzeichnet, dass**
die Platten des ersten Paares (110, 120) von flachen Platten jeweils Stufen auf der Außenfläche an den Verbindungsabschnitten jeder flachen Platte in Richtung der jeweiligen Eckabschnitte aufweisen.

**2.** Reaktionszelle nach Anspruch 1, wobei a1 und a2 sowie b1, b2, b3 und b4 die folgende Beziehung erfüllen:

$$\max(a1,a2) - \min(b1,b2) \le 0{,}2\ \text{mm}.$$

**3.** Reaktionszelle nach Anspruch 1, wobei die Außenfläche eine Form mit einem Krümmungsradius r am Verbindungsabschnitt aufweist und mit dem Eckabschnitt verbunden ist, wobei r > 0,1 mm erfüllt ist.

**4.** Reaktionszelle nach einem der Ansprüche 1 bis 3, wobei Dicken des ersten Paares flacher Platten der beiden einander zugewandten Paare flacher Platten größer sind als Dicken des zweiten Paares flacher Platten, und die Teile mit den größeren Dicken des ersten Paares flacher Platten als Strahlenübertragungsteile dienen.

**5.** Automatischer biochemischer Analysator, ausgestattet mit einer Reaktionszelle nach einem der Ansprüche 1 bis 4.

## Revendications

**1.** Cellule de réaction moulée (100), comprenant deux paires (110, 120 ; 130, 140) de plaques plates se faisant face, dans laquelle une première paire (110, 120) des deux paires (110, 120 ; 130, 140) comprend une première plaque plate (110) et une seconde plaque plate (120), des portions de coin (150, 160, 170, 180) reliant les plaques plates, et une portion inférieure (191),
dans laquelle les relations suivantes sont satisfaites :

$$a1 > b1,\ a1 > b2,\ a2 > b3\ \text{et } a2 > b4,$$

dans lesquelles a1 et a2 représentent respectivement les épaisseurs de la première paire (110, 120) de plaques plates et b1 et b2 représentent respectivement les épaisseurs maximales des portions de coin (150, 160) reliées aux extrémités opposées de la première plaque plate (110) ayant l'épaisseur a1, et b3 et b4 représentent respectivement les épaisseurs maximales des portions de coin (170, 180) reliées aux extrémités opposées de la seconde plaque plate (120) ayant l'épaisseur a2,
**caractérisée en ce que**
les plaques de la première paire (110, 120) de plaques plates présentent chacune des gradins sur la surface extérieure au niveau des portions de liaison de chaque plaque plate vers les portions de coin respectives.

**2.** Cellule de réaction selon la revendication 1, dans laquelle a1 et a2, et b1, b2, b3 et b4 satisfont la relation suivante :

$$\max(a1, a2) - \min(b1, b2) \le 0{,}2\ \text{mm}.$$

**3.** Cellule de réaction selon la revendication 1, dans laquelle la surface extérieure a une forme présentant un rayon de courbure r au niveau de la portion de liaison et est reliée à la portion de coin tout en satisfaisant r > 0,1 mm.

**4.** Cellule de réaction selon l'une quelconque des revendications 1 à 3, dans laquelle les épaisseurs de la première paire de plaques plates des deux paires de plaques plates se faisant face sont plus grandes que les épaisseurs de la seconde paire de plaques plates, et les parties ayant les plus grandes épaisseurs de la première paire de plaques plates servent de parties de transmission de faisceau.

**5.** Analyseur biochimique automatique équipé d'une cellule de réaction telle que décrite dans l'une quelconque des revendications 1 à 4.

[FIG. 1]

(a)                                        (b)

100

150  190  160
b1  a1  b2
110
191
a3  130  140  a4
120
b3  a2  b4
170  180

[FIG. 2]

(a)

(b)

[FIG. 3]

(a)                                    (b)

[FIG. 4]

| | PERSPECTIVE VIEW | SHORT SIDE FRONT VIEW | LONG SIDE FRONT VIEW |
|---|---|---|---|
| (a) | GATE | MERGING ANGLE = 110° | MERGING ANGLE = 130° |
| (b) | GATE | NO MERGING ANGLE | MERGING ANGLE = 100° |
| (c) | GATE | NO MERGING ANGLE | MERGING ANGLE = 150° |
| (d) | GATE | NO MERGING ANGLE | MERGING ANGLE = 150° |

[FIG. 5A]

[FIG. 5B]

(a)

PHOTOMETRY BEAM RUNNING DIRECTION

a1, b1, b2, a3, Y2, a4, Y1, b3, X2, b4, a2, X1

(b) SHAPE USED FOR COMPUTATION

|    | UNIT | MINIMUM | MAXIMUM |
|----|------|---------|---------|
| a1 | mm   | 0.5     | 1       |
| a2 | mm   | 0.5     | 1       |
| a3 | mm   | 0.5     | 1       |
| a4 | mm   | 0.5     | 1       |
| b1 | mm   | 0.5     | 1       |
| b2 | mm   | 0.5     | 1       |
| b3 | mm   | 0.5     | 1       |
| b4 | mm   | 0.5     | 1       |
| X1 | mm   | 3       | 6       |
| X2 | mm   | 2       | 4       |
| Y1 | mm   | 5       | 8       |
| Y2 | mm   | 3       | 6       |

(c) RESIN PHYSICAL PROPERTIES IN COMPUTATION

|                      | UNIT   | MINIMUM | MAXIMUM |
|----------------------|--------|---------|---------|
| DENSITY              | kg/m3  | 0.8     | 1.1     |
| VISCOSITY            | Pa·s   | 1       | 1E+6    |
| SPECIFIC HEAT        | J/kgK  | 1000    | 3000    |
| THERMAL CONDUCTIVITY | W/mK   | 0.1     | 0.3     |

(d) MOLDING CONDITIONS IN COMPUTATION

|                       | UNIT | MINIMUM | MAXIMUM |
|-----------------------|------|---------|---------|
| INJECTION TEMPERATURE | ℃    | 200     | 300     |
| MOLD TEMPERATURE      | ℃    | 50      | 100     |

EP 3 109 617 B1

13

[FIG. 6]

[FIG. 7]

(a)

(b)

[FIG. 8]

|  | (a) | (b) | (c) |
|---|---|---|---|
|  | b1<b2 | b1=b2 | b1>b2 |

TOP VIEW

b1     b2

FLOW FRONT

FRONT
VIEW ON
CHARGING
RESIN

CHARGING RESIN
DIRECTION

GATE

[FIG. 9A]

907

904

908

906

905

901   902   903

[FIG. 9B]

911

913

912

AUTOMATIC BIOCHEMICAL ANALYZER

910

ROTATING

904

901

907

**EP 3 109 617 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005283539 A
- EP 0404258 A2
- JP S60166843 A
- EP 1870713 A1
- US 2012156796 A1